# EUROPEAN PATENT APPLICATION

(11) **EP 4 597 419 A1**
(43) Date of publication of application: **06.08.2025**
(21) Application number: 24154948.4
(22) Date of filing: 31.01.2024
(51) Int. Cl.: G06T 7/00

(54) **METHOD FOR GENERATING A JOINING PATTERN FOR TEXTILE**

(71) Applicant: RecoMended Repair AB, 65341 Karlstad (SE)
(72) Inventor: LINDTORP, Erik, Karlstad (SE); LEDIN DA ROSA, Rikard, Forshaga (SE)
(74) Representative: AWA Sweden AB

(57) **Abstract**

The present invention relates to a computer-implemented method and a device for generating a joining pattern for a textile based on an image of the textile, the method comprising the steps of acquiring an image of a portion of the textile via a camera device; identifying a required portion of the textile being required to be covered by the joining pattern, wherein said identifying is performed using an image analysis technology, a machine learning model trained to recognize the required portion, or from manual input by a user in a man-machine interface; identifying a textile structure of the textile from the acquired image by an image analysis technology, a machine learning model trained to recognize textile structures of textiles, or from manual input by a user in a man-machine interface; and generating the joining pattern based on the required portion of the textile, and the identified textile structure wherein the joining pattern is adapted to cover at least the required portion of the textile.

## Description

### Technical field

The present disclosure relates to a computer implemented method for generating a joining pattern for a textile, and a data processing device.

### Background

Repairing damaged products is becoming increasingly important, especially in the textile industry. Many damaged textile products are thrown out and end up in landfills. Finding solutions to streamline textile repairing processes may lead to, for example, reduced waste and decreased pollution. Furthermore, legislation is being discussed that may force textile producers to enable repair of the products to the costumers. It is therefore crucial to find textile repair solutions that can be scaled up to an industrial level to both minimize the environmental effect and to reduce the cost of repairing textiles. The importance for this situation is relevant both in the aspect of providing machines that can be used for mending textiles, such as sewing or embroidery machines, both also to the aspect of providing an effective way of determining how a particular textile should be repaired, since each damage or defect on a textile may be individual in terms of shape, location etc. Consequently, there is a need for a method that facilitates an efficient repair or mending of a textile.

### Summary

It is an object of the present invention to provide a solution that meets the requirements for the industry. Furthermore, it is an object to provide a computer-implemented method for generating a joining pattern for a textile.

The invention is defined by the appended independent claims, with embodiments being set forth in the appended dependent claims, in the following description and in the drawings.

A computer implemented method for generating a joining pattern for a textile based on an image of the textile, the method comprising the steps of acquiring an image of a portion of the textile via a camera device; identifying a required portion of the textile being required to be covered by the joining pattern, wherein said identifying is performed using an image analysis technology, a machine learning model trained to recognize the required portion, or from manual input by a user in a man-machine interface; identifying a textile structure of the textile from the acquired image by an image analysis technology, a machine learning model trained to recognize textile structures of textiles, or from manual input by a user in a man-machine interface; and generating the joining pattern based on the required portion of the textile, and the identified textile structure wherein the joining pattern is adapted to cover at least the required portion of the textile.

The textile may be a fabric. The textile may be a portion of a textile product. The required portion of the textile may be a defect or damaged portion in the need to be mended. The required portion of the textile may be a portion where the textile is thinner and that may have a risk of being damaged in the future. The locating of the required portion of the textile may be done manually or automatically.

The machine learning model trained to identify the required portion may be an artificial neural network. The machine learning model may be trained to identify a defect, damaged or weakened portion of the textile when provided with the acquired image of the textile. The training may be performed using previous images of textiles with a defect, damaged or weakened portion. Alternatively, the required portion may be identified using an image analysis technology. An image analysis tool may be used, provided with the acquired image of the textile, and configured to identify a boundary of the required portion. The image analysis tool may be configured to identify differences in the surface of the textile indicative of a defect, damaged or weakened portion of the textile. This may be done by analyzing pixel values of the acquired image. Alternatively, the required portion may be identified based on a user input via a man-machine interface. A user may, based on the acquired image, manually identify the required portion. The identification may be done by the user looking at the acquired image, and via the interface draw or mark the required portion. Using either of the above described ways of identifying the required portion, the required portion may have a predetermined shape, such as a rectangular shape or circular shape, or the required portion may have a freeform based on the characteristics of the identified portion of the textile. In some embodiments, the user may, via the interface, identify a portion to be covered by the joining pattern, based on which input the required portion may be determined. Such determined required portion may then cover an additional area outside the portion identified by the user.

The shape and size of the required portion may be used for the generation of the joining pattern, in determining an area to be covered by the joining pattern.

The textile structure may be information on characteristics of the textile. The information of the textile structure may comprise weave direction, type of weave, thread direction and/or thread size. The information of the textile structure may in some embodiments further comprise one or more colors of the textile. The information of the textile structure may be identified for at least the required portion. In some embodiments also for an area outside the required portion.

The textile structure may be identified in order to determine one or more directions in the joining pattern to be generated. For instance, the weave direction of the textile may be used to determine in which directions the pattern should extend to provide a desired result. In some embodiments, the identification of the textile structure may result in a determination that no specific direction of the weave or threads is identified, which may be the case for some types of textiles. Such determination may then also be used when generating the joining pattern. For instance, if no weave direction is identified to be used for determining one or more directions in the joining pattern, it may be determined that a predetermined direction, or a direction based on the required portion, should be used for the determination of one or more directions in the joining pattern.

The machine learning model trained to recognize the textile structure may be an artificial neural network. The machine learning model may be trained to recognize a structure of the textile, e.g. the textile surface, when provided with the acquired image of the textile. The training may be performed using previous images of textiles with different structures. The acquired image and the recognized textile structure may be used to further train the machine learning model trained to recognize textile structures. The textile structure may be e.g. weave direction, weave type, thread direction, thread thickness. Alternatively, the textile structure may be identified using an image analysis technology. An image analysis tool may be used, provided with the acquired image of the textile, and configured to identify e.g. a direction of the weave of the textile. This may be done by analyzing pixel values of the acquired image. Alternatively, the textile structure may be identified based on a user input via a man-machine interface. A user may, based on the acquired image, manually identify e.g. a weave direction by drawing or marking a line on the acquired image, which line may identify the weave direction. The user may alternatively input a value, such as a numerical value, via the interface that indicates e.g. a weave direction, type of weave, thread direction and/or thread size.

The joining pattern to be generated may be a stitch pattern for e.g. a sewing machine or an embroidery machine, or a pattern for an ultrasonic welding machine that may be used to join parts of the textile. The joining pattern may be adapted to be used with a joining technique, such as sewing, gluing or welding.

The advantage of generating a joining pattern is that it may be used by an automated machine, such as an embroidery machine or other mending machine. Automating a repair of a textile makes it possible to scale up the repair process to an industrial scale. It is cost efficient since it does not require the repair of the textile to be done manually. It is faster to use an automated mending machine than repairing the textile manually. The workers operating the automated mending machines may not need to have an as extensive training period as workers having to learn how to repair the textiles manually. The quality of the repair may also be better when using an automatic mending machine compared to doing the repair manually. All of this encourages companies and consumer to repair their damaged textile products which leads to reducing waste and saving money. In embodiments where automated processes (using machine learning model or image analysis technology) are used for the identification of required portion and textile structure, the advantages may be even greater in providing time and cost efficient repair of textiles.

The generated joining pattern may be provided as a set of coordinates in a coordinate system. The set of coordinates may comprise a plurality of subsets of coordinates for different segments of the joining pattern. The coordinate system may be selected or defined based on the acquired image of the textile.

The generated joining pattern may be converted into a suitable format readable by the machine intended to use the joining pattern on the textile. The conversion may be based on a set of coordinates provided by the joining pattern.

The joining pattern may be used for attaching a repair patch on a backside of the textile. The repair patch may be configured to cover at least the required portion of the textile.

The step of generating the joining pattern may comprise the steps of determining a plurality of pattern segments; determining a direction for each pattern segment; and determining end points for each pattern segment.

The joining pattern may comprise of a plurality of pattern segments. In an embodiment of a sewing pattern being generated, each pattern segment may be a line of one or more sewing stitches between two end points in the pattern. In an embodiment of an ultrasonic welding pattern being generated, each pattern segment may be a line of one or more welding points between two end points in the pattern. The joining pattern may change direction at each end point. The joining pattern may be a zigzag pattern with straight or curved pattern segments between the end points. When a pattern segment is formed with a curved shape or an arc shape, the step of determining the direction of the pattern segment may comprise determining the curve or arc shape between the two end points. The direction of each pattern segment may be determined based on a desired shape and/or density of the joining pattern. A higher density of the joining pattern may mean less distance between two adjacent pattern segments. Two adjacent pattern segments may share an end point. The direction of the pattern segments may depend on the characteristics of the textile at the location of the required portion, such as where on a garment the required portion is located.

The determination of direction and/or end points for the pattern segments may be provided using a machine learning model, such as an artificial neural network, trained to determine suitable directions and end points for pattern segments in a joining pattern. The machine learning model may be trained to determine suitable directions and end points for pattern segments when provided with the acquired image of the textile and/or information of the required portion and/or the determined textile structure. The training may be performed using previous images of textiles with a defect, damaged or weakened portion, required portions, and/or textile structures.

By end points it may be meant a position where a pattern segment terminates along its extension direction. The end point may be a position where the joining pattern changes direction, from one pattern segment to another.

The pattern segments may extend in straight lines between the end points, or extend in a curved or arc shape between the end points.

Depending on the desired characteristic of the joining pattern, which may depend on the textile structure and/or characteristics of the portion of the textile to be covered by the joining pattern, such as shape or other characteristics of a defect, damage or other weakness of the textile, the pattern segments may be formed in straight lines between the end points, or in a curved or arc shape with a determined curvature between the end points. A mending of the textile in the required portion thereof may thereby be provided in a way that best fits the characteristics of the textile.

Each pattern segment and end point may constitute a subset of coordinates in the joining pattern comprising a set of coordinates.

The step of identifying the textile structure may comprise a step of identifying a weave direction, a weave type, a thread direction, a thread size and/or another weave characteristic of the textile.

The weave direction, weave type, thread direction, thread size and/or other weave characteristic may be identified using a machine learning model, such as an artificial neural network, trained to identify such characteristic of a textile based on an acquired image of the textile. The advantage of acquiring e.g. the weave or thread direction of the textile from the acquired image by a machine learning model trained to recognize directions of textiles is that there is no need for an operator to manually input such information. It is faster for the machine learning architecture to recognize e.g. the weave direction compared to having the operator doing it manually. In other embodiments, a weave direction or thread direction of the textile may be manually provided by a user via a man-machine interface, or identified using an image analysis technology of the acquired image of the textile. The weave, thread or other characteristic of the textile may provide information of the structure of the surface of the textile. This information may be used for the generation of the joining pattern. For instance, directions of pattern segments of the joining pattern may be determined based on the identified textile structure, such as weave direction. The weave direction of the textile may be used as a reference direction for the directions of the pattern segments. The weave direction may be used to generate a joining pattern that blends in with the textile, and thereby becomes less noticeable. Each pattern segment, when extending along a straight line, may be determined to extend along a segment direction. Each segment direction may be determined with an angle offset to the weave direction. The offsets of the segment directions may be determined to provide the zigzag pattern of the pattern segments. Other directions may be used as reference direction.

The step of identifying the textile structure may further comprise identifying one or more colors of the textile in the required portion, and the step of generating the joining pattern may further comprise a step of determining one or more colors for the joining pattern based on the identified detected one or more colors.

The step of identifying one or more colors may be performed using a machine learning model trained to identify one or more colors of a textile based on an image of a textile.. The training may be performed using previous images of textiles having one or more colors in a required portion. The generated joining pattern may then comprise one or more first subsections of pattern segments of the first color and one or more second subsections of pattern segments of the second color. The location of the one or more first subsections may correspond to the location of the sections of the textile having the first color, and the location of the one or more second subsections may correspond to the location of the sections of the textile having the second color. When using the joining pattern in e.g. an embroidery machine, threads of different colors may be used for the different subsections of the joining pattern. When determining one or more colors for the joining pattern, one or more colors from a predetermined set of colors may be selected, which selected color(s) may be one or more colors determined as closest in color with the identified color(s) from the predetermined set of colors.

The end points for the pattern segments may be determined on a bounding line of the required portion. The required portion may define an area of the textile that needs to be covered by the joining pattern. In some embodiments, it may thereby be enough to cover the required portion. The end points of the pattern segments may thereby be located on the boundary of the required portion.

The method may comprise a step of identifying a buffer area extending outside the required portion and surrounding the required portion, and randomly distributing the end points for each pattern segment in the buffer area along the determined direction for each pattern segment.

The buffer area may be defined manually by a user via a man-machine interface. Alternatively, the buffer area may be defined automatically by a machine learning model trained to define a suitable buffer area based on the acquired image of the textile and/or the defined required portion, or using an image analysis technology.

The joining pattern may be generated further using the buffer area as input. The buffer area may be an area larger than the required portion in one or more directions, thereby enclosing the required portion. The buffer area may be used for generating a joining pattern that does not have fixed or straight boundaries. In some cases it is not desired with e.g. a strictly square shaped joining pattern, or other shapes with a uniform boundary, but rather a joining pattern with more random boundaries. In some embodiments, the buffer area may be set based on a predetermined extension of the required portion in one or more directions. The extension may be 1-5 cm. The buffer area may have the same shape as the required portion. In other embodiments the buffer area may have an independent shape in one or more directions relative to the required portion. When the joining pattern is generated, end points for each pattern segment may be determined. The location of each end point may be randomly determined within the interval of the boundary of the required portion and the buffer area. Each end point may be assigned a randomized number between 0 and 1, wherein 0 represents a location on the boundary of the required portion and a 1 a location on the boundary of the buffer area, or vice versa. The pattern segments may thereby have varying length. The direction of each pattern segment may be predetermined (e.g. straight or arc shaped), and the randomly determined location of an end point may be a location randomly distributed between the required portion and the buffer area along the direction of the pattern segment. The advantage of using randomly distributed end points in the buffer area to determine the pattern segments may be that it decreases the appearance of a sharp line where the joining pattern ends. When repairing the textile over the required portion, a more discrete repair may be achieved.

When using a buffer area, a step of identifying one or more colors may be performed by identifying one or more colors of the textile within the required portion and the buffer area. Such identification may otherwise be performed in the same way as described above for the required portion.

The step of generating the joining pattern may further comprise the steps of determining a center line of the required portion; and determining the direction of each pattern segment as within an angle interval from a direction of the center line.

A center line of the required portion may be determined and used as a reference direction for the generation of the joining pattern. For instance, if the identification of textile structure provides that no weave direction or other direction may be identified from the acquired portion, a reference direction based on the shape of the required portion may be used. The center line may be used as an alternative to the weave direction if e.g. the weave direction is not important to follow, or if the textile has no clear weave direction (or other weave or thread related characteristic) to follow. The directions of the pattern segments may be determined with the center line as a reference. Each pattern segment may have a direction with an angle offset within an interval relative to the direction of the center line, or a direction perpendicular to the center line. The center line may be determined as a line in a direction providing the longest possible extension of the line within the required portion. Alternatively, the center line may be determined as a line along a longitudinal extension of the required portion.

When the textile structure is identified as a weave direction or thread direction, the direction of each pattern segment may be determined within an angle interval from the identified weave direction or thread direction.

The method may further comprise a step of using a near-infrared light source to illuminate the textile, wherein the camera device used for acquiring the image of the textile may be a near-infrared camera and the textile may be positioned between the near-infrared heat light and the near infrared camera when acquiring the image.

The method may further comprise a step of identifying an exclusion area of the textile defining one or more areas to be excluded from being covered by the joining pattern, and the step of generating the joining pattern may further be based on the identified exclusion area. The step of identifying the exclusion area may be performed by a machine learning model trained to identify one or more exclusion areas of textiles. By identifying exclusion area it may be meant to identify objects which forms one or more exclusion areas. The machine learning model may be trained to identify an exclusion area when provided with an acquired image of a textile. The training may be performed using previous images of textiles with in which exclusion areas are to be identified.

The one or more exclusion areas provide areas which should not be covered by any part of the joining pattern. The joining pattern may not extend over the identified object(s) due to a risk of damage to the machine intended to use the joining pattern. When such objects are present on the textile, a step of identifying objects for forming an exclusion area may be performed. Such identification may be performed by a machine learning model trained to identify objects on a textile that needs to be excluded from a joining pattern. When the exclusion area is formed based on the identified objects, the generation of the joining pattern may be performed taking the exclusion area into account. The distribution of end points may be randomized within an available area in a buffer area such that no end points or pattern segments are located in or extend across any exclusion area. When the direction of a pattern segment extend towards an exclusion area within the buffer area, the location of the end point may be randomized within the area between the boundary of the required portion and the exclusion area. In situations where an exclusion area is located at least partly within an intended required portion, the boundary of the required portion may be adapted to the boundary of the exclusion area within the required portion. The end points may at the location of the exclusion area then be located at the interface boundary between the required portion and the exclusion area. This may be regardless of if a buffer area may be used or not.

The method may further comprise a step of identifying one or more objects that may form the one or more exclusion areas. Such objects may be one or more zippers, buttons, rivets and/or other objects of a hard material, such as metal or plastic, on the textile. The identification may be performed based on the acquired image. An object to form part of the one or more exclusion areas may further be a seam or a pocket on the textile.

When a seam is identified as an object forming part of an exclusion area, the pattern segments may be allowed to extend a distance onto the seam. End points may thereby be located within the distance into the seam. The distance may provide a maximum distance into the seam at which end points may be located. The distribution of end points may then be randomized with said distance into the seam as a limit. The exclusion area may provide that end points may be located at maximum within the distance into the seam. The distance may be 1-5 mm into the seam, measured from an edge of the seam. Such feature of having pattern segments extend onto a seam a predetermined distance may be used regardless of if a buffer area is used or not.

The method may further comprise a step of locating a frame that the textile may be arranged on from the acquired imaged. The frame may be an object that may for part of the one or more exclusion areas. The textile may be arranged in a frame in order to fixate the textile for acquiring the image. The image of the textile being used may thereby comprise a frame. The frame may surround the required portion of the textile.

According to a second aspect of the invention, a joining pattern generation device for generating a joining pattern for a textile is provided, the joining pattern generation device comprising a processing unit configured to acquire an image of a portion of a textile via a camera device; identify a required portion of the textile being required to be covered by the joining pattern, wherein said identifying is performed using an image analysis technology, a machine learning model trained to recognize the required portion, or from manual input by a user in a man-machine interface; identify a textile structure of the textile from the acquired image by an image analysis technology, a machine learning model trained to recognize textile structures of textiles, or from manual input by a user in a man-machine interface; and generating the joining pattern based on the required portion of the textile, and the identified textile structure wherein the joining pattern is adapted to cover at least the required portion of the textile.

The processing unit of the joining pattern generation device may be configured to perform any of the functions described for any of the embodiments of methods above.

### Brief description of the drawings

The invention will in the following be described in more detail with reference to the enclosed drawings, wherein:
Fig. 1 shows a schematic view of a system involving a joining pattern generation device according to an embodiment of the invention.
Fig. 2 shows a flow chart of a method according to an embodiment of the invention.
Fig. 3 shows a top view of a textile for which a joining pattern is to be generated according to an embodiment of the invention.
Fig. 4 shows a top view of a textile with a required portion for which a joining pattern is to be generated according to an embodiment of the invention.
Fig. 5 shows a top view of a textile with a required portion and weave direction for which textile a joining pattern is to be generated according to an embodiment of the invention.
Fig. 6 shows a top view of a textile with a required portion, weave direction and generated joining pattern according to an embodiment of the invention.
Fig. 7 shows a portion of a generated joining pattern according to an embodiment of the invention.
Fig. 8 shows a top view of a textile with a required portion and generated joining pattern according to an embodiment of the invention.
Fig. 9 shows a top view of a textile with a required portion, buffer area and generated joining pattern according to an embodiment of the invention.
Fig. 10 shows a top view of a textile with a required portion, buffer area and generated joining pattern according to an embodiment of the invention.
Fig. 11 shows a top view of a textile with a required portion, buffer area, exclusion area and generated joining pattern according to an embodiment of the invention.
Fig. 12 shows a top view of a textile with a required portion, buffer area, exclusion area and generated joining pattern according to an embodiment of the invention.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

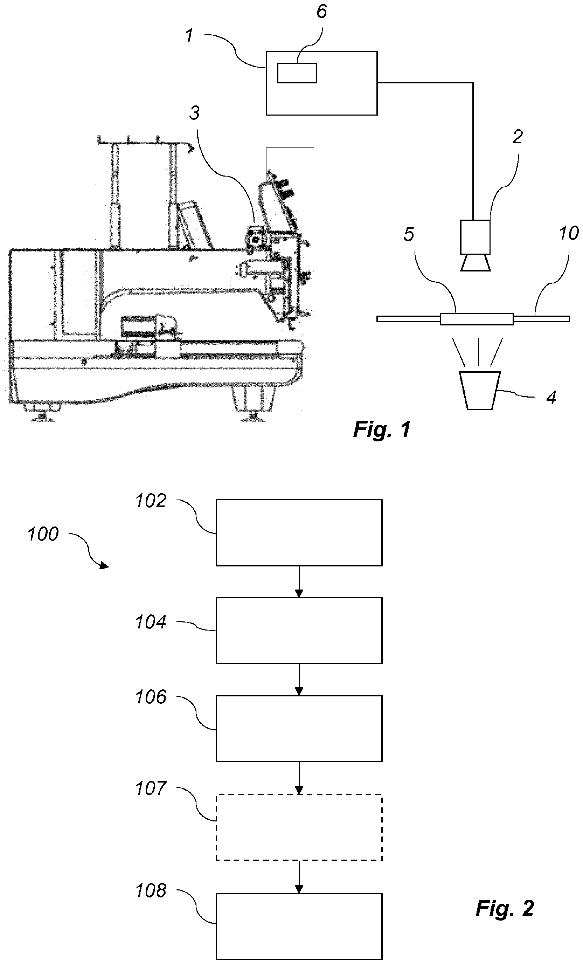

Fig. 1 illustrates an arrangement wherein the present invention may be used. A textile 10 having a damaged portion 20 is provided. Instead of damaged, said portion 20 may in some other way be defect, worn, weak or in the need of a repair or strengthening. The present invention is used to generate a joining pattern to be used on the textile 10 to cover the damaged portion 20 in a desired way. The generation of the joining pattern is based on an image of a portion of the textile 10. In order to generate the image, a camera device 2 is used. The camera device 2 is arranged to capture an image of the textile 10. In order to improve the quality of the captured image, the textile 10 may be illuminated by a lighting device 4, either as a backlight as illustrated, or lightening the same side of the textile 10 as the camera device 2 is capturing.

The joining pattern is generated by a device 1 for joining pattern generation, configured to acquire the captured image of textile 10 and comprising a processing unit 6 configured to generate the joining pattern. The device 1 may be communicatively connected to the camera device 2 in order to acquire the image directly from the camera device wirelessly or by wire, as illustrated. Alternatively, the device 1 may be configured to acquire the image from a storage unit (not shown), either locally or via a communication network, which storage unit previously received the image captured by the camera device 2.

The joining pattern generated by the device 1 may be intended to be used by a mending machine 3, such as an embroidery machine or an ultrasonic welding machine. The device 1 may therefore be communicatively connected with the mending machine 3, wirelessly or by wire, as illustrated. Alternatively, the device 1 is configured to store the generated joining pattern, or to communicate the generated joining pattern to an external unit, from which the mending machine 3 later may retrieve the joining pattern.

The device 1 may in some embodiments be provided as a cloud network unit, communicatively connected via a communication network with the camera device 2 (or a storage unit providing the image) and/or the mending machine 3.

Fig. 2 illustrates a computer-implemented method 100 according to an embodiment of the present invention. The method 100 may be implemented by the device 1, which may comprise a processing unit 6 configured to perform the method 100. The method 100 comprises a step of acquiring 102 an image of a portion of the textile 10. The image may be captured by the camera device 2. The method 100 further comprises a step of identifying 104 a required portion 30 of the textile 10. The required portion 30 is a portion required to be covered by the joining pattern. The identifying 104 is performed using an image analysis technology, a machine learning model trained to recognize the required portion 30, or from manual input by a user in a man-machine interface. The identifying 104 may be performed by the processing unit in the device 1. The method 100 further comprises a step of identifying 106 a textile structure of the textile 10 from the acquired image. The identifying 106 of the textile structure is performed using an image analysis technology, a machine learning model trained to recognize textile structures of textiles, or from manual input by a user in a man-machine interface. The identifying 106 may be performed by the processing unit in the device 1. Finally, the method 100 comprises a step of generating 108 the joining pattern based on the required portion 30 of the textile 10, and the identified textile structure, wherein the joining pattern is adapted to cover at least the required portion 30 of the textile 10. The order in which the steps of identifying 104 a required portion and identifying 106 a textile pattern may be the opposite than illustrated, or the two steps may be performed in parallel.

In some embodiments, the method 100 may further comprise a step of identifying 107 one or more exclusion areas 70 to be excluded from being covered by the joining pattern 50. The step of identifying 107 one or more exclusion areas 70 may be performed before or after either of the steps 104, 106, or in parallel with either or both of them.

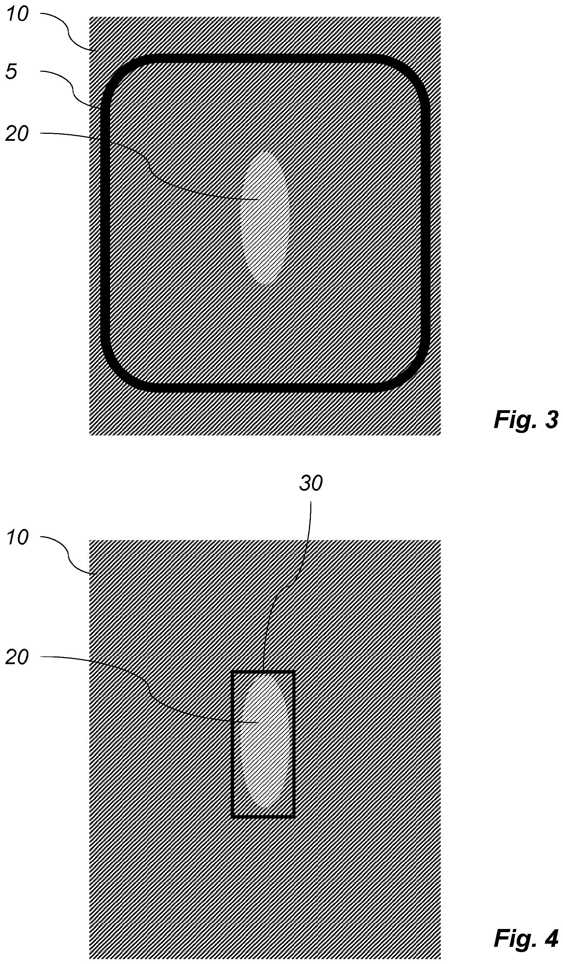

Fig. 3 illustrates a portion of the textile 10, a portion which may be reproduced in the acquired image. The textile 10 may be arranged in a frame 5 (also seen in fig. 1), which frame 5 has the purpose of fixating the portion of the textile 10 comprising the damaged portion 20, to improve quality of the capturing of the image.

In fig. 4 the step of identifying 104 the required portion 30 is illustrated. The required portion 30 is determined as an area in which the damaged portion 20 is located, and which area must be covered by the joining pattern. In some embodiments, the required portion 30 sets the boundary of the joining pattern. The required portion 30 may at least set a minimum boundary of the joining pattern.

The required portion 30 is illustrated as a rectangular box. In some embodiments, the required portion 30 is always defined with a rectangular shape. However, in other embodiments, the required portion 30 may have other shapes, both predefined shapes, or a freeform shape based on e.g. the shape of the damaged portion 20.

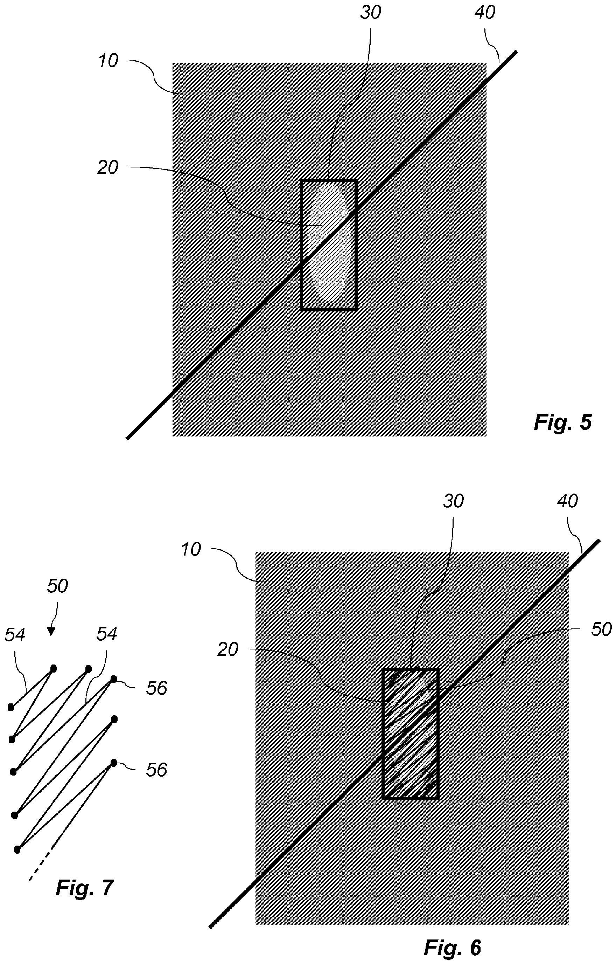

Fig. 5 illustrates the step of identifying 106 the textile structure of the textile 10. In the illustrated embodiment the textile structure is a weave direction 40 of the textile 10. The weave direction 40 is used when generating the joining pattern.

Figs. 6-7 illustrates the step of generating 108 the joining pattern 50. The joining pattern 50 is generated based on the required portion 30 and the weave direction 40. When generating the joining pattern 50, a plurality of pattern segments 54 are determined. A pattern segment 54 extends in a straight line or along a curvature (arc) between two end points 56. In fig. 7 a subset of the pattern segments 54 and end points 56 of the joining pattern 50 is illustrated. The end points 56 of the joining pattern 50 set the boundary of the extension of the joining pattern 50. In the embodiment illustrated in fig. 6, only the required portion 30 should be covered by the joining pattern 50. All end points 56 are thereby determined at positions on the boundary of the required portion 30. The pattern segments 54 extend between the end points 56 in a zigzag pattern. Each pattern segment 54 extend along a direction of a straight line or along a curvature (arc) until reaching an end point 56 at which the joining pattern 50 changes direction into a new pattern segment 54. If using the joining pattern 50 in an embroidery machine, the joining pattern 50 is used as a pattern for stitches. Along each pattern segment 54, one or more stitches are provided.

The weave direction 40 of the textile 10 is used as a reference direction for the directions of the pattern segments 54. The weave direction 40 may be used to generate a joining pattern 50 that blends in with the textile, and thereby becomes less noticeable. Each pattern segment 54, when extending along a straight line, is determined to extend along a segment direction. Each segment direction may be determined with an angle offset to the weave direction 40. The offsets of the segment directions may be determined to provide the zigzag pattern of the pattern segments 54.

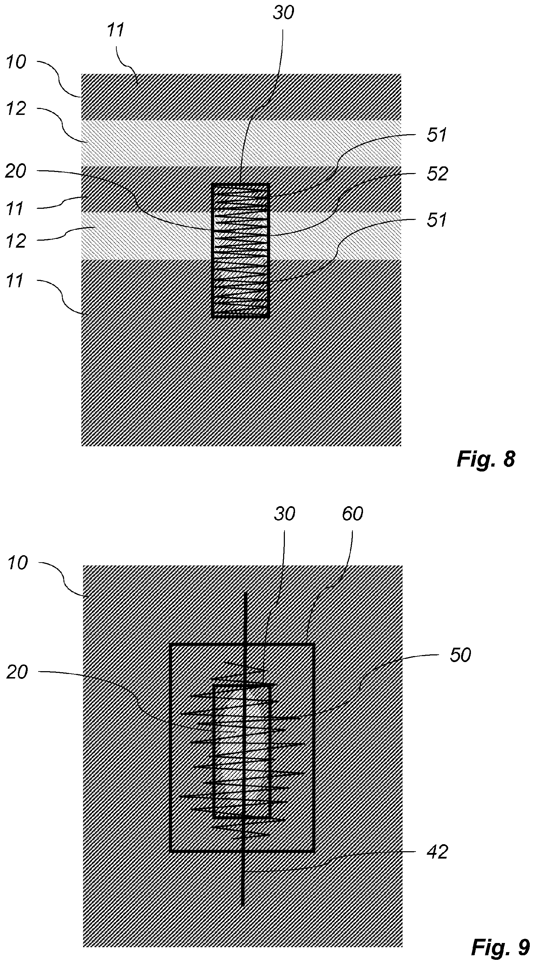

Fig. 8 illustrates an embodiment wherein the step of identifying 106 the textile structure comprises a step of identifying one or more colors of the textile 10. In the illustrated embodiment the textile 10 comprises sections 11 having a first color and sections 12 having a second color. The step of identifying one or more colors may be performed using a machine learning model trained to identify one or more colors of a textile 10. The generated joining pattern 50 may then comprise one or more first subsections 51 of pattern segments 54 of the first color and one or more second subsections 52 of pattern segments 54 of the second color. The location of the one or more first subsections 51 may correspond to the location of the sections 11 of the textile 10 having the first color, and the location of the one or more second subsections 52 may correspond to the location of the sections 12 of the textile 10 having the second color. When using the joining pattern 50 in an embroidery machine, threads of different colors may be used for the different subsections 51, 52 of the joining pattern 50.

Fig. 9 illustrates an embodiment wherein the joining pattern 50 is determined using a buffer area 60. The buffer area 60 is an area larger than the required portion 30 in one or more directions, thereby enclosing the required portion 30. The buffer area 60 is used for generating a joining pattern 50 that does not have fixed or straight boundaries. In some cases it is not desired with e.g. a strictly square shaped joining pattern 50, but rather a joining pattern 50 with more random boundaries. In some embodiments, such as the illustrated embodiment, the buffer area 60 is set based on a predetermined extension of the required portion 30 in all directions, such an extension of 1-5 cm. The buffer area 60 thereby has the same shape as the required portion 30. In other embodiments the buffer area 60 may have an independent shape in one or more directions relative to the required portion 30.

When the joining pattern 50 is generated, end points 56 of each pattern segment 54 are determined. The location of each end point 56 is randomly determined within the interval of the boundary of the required portion 30 and the buffer area 60. Each end point 56 may be assigned a randomized number between 0 and 1, wherein 0 represents a location on the boundary of the required portion 30 and a 1 a location on the boundary of the buffer area 60, or vice versa. The direction of each pattern segment 54 may be predetermined (e.g. straight or arc shaped), and the randomly determined location of an end point 56 may be a location randomly distributed between the required portion 30 and the buffer area 60 along the direction of the pattern segment 54.

In the illustrated embodiment of fig. 9, a center line 42 of the required portion 30 has been determined and is used as a direction reference for the generation of the joining pattern 50, instead of a weave direction 40 is in previously described embodiments. The center line 42 may be used as an alternative to the weave direction 40 if e.g. the weave direction 40 is not important to follow, or if the textile 10 has no clear weave direction (or other weave or thread related characteristic) to follow. The directions of the pattern segments 54 may be determined with the center line 42 as a reference, and each pattern segment 54 may have a direction within an interval relative to the direction of the center line 42 or a direction perpendicular to the center line 42.

The features of identifying one or more colors of the textile 10 described above may be equally applied in embodiments using a buffer area 60. The color(s) also in the buffer area 60 may then be identified and used for generating the joining pattern.

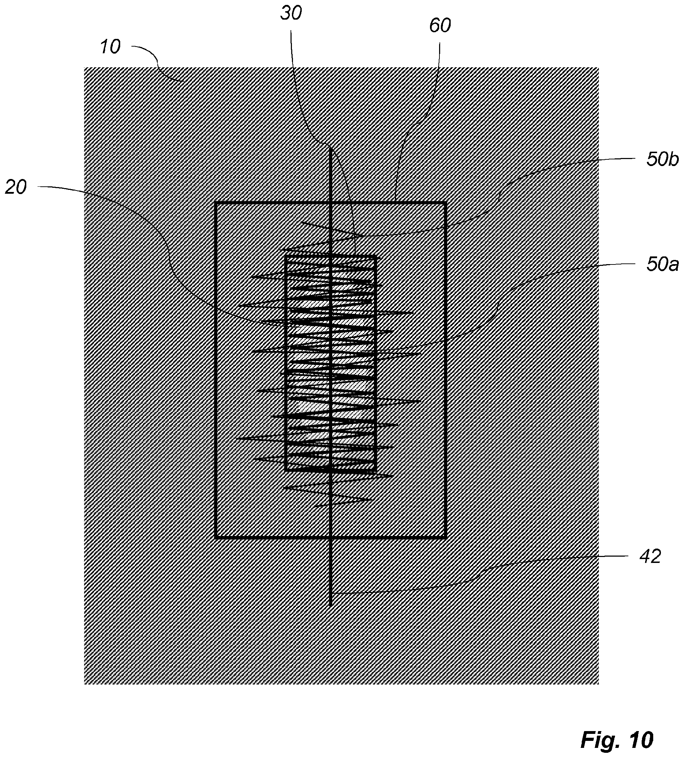

Fig. 10 illustrates an embodiment wherein the joining pattern comprises a first part 50a extending over the required portion 30, with pattern segments 54 ending on the boundary of the required portion 30, and a second part 50b comprising pattern segments 54 ending at randomly distributed locations in the buffer area 60. Such joining pattern 50 with two parts 50a, 50b may be used when extra reinforcement of the textile 10 is needed. The first part 50a may be used to strengthen the textile around the damaged portion 20 with a pattern that covers the damaged portion 20 in a desired manner. The second part 50b may be used to strengthen the textile in a wider range around the damaged portion 20. The second part 50b may also be used for fastening a repair patch on the backside of the textile 10.

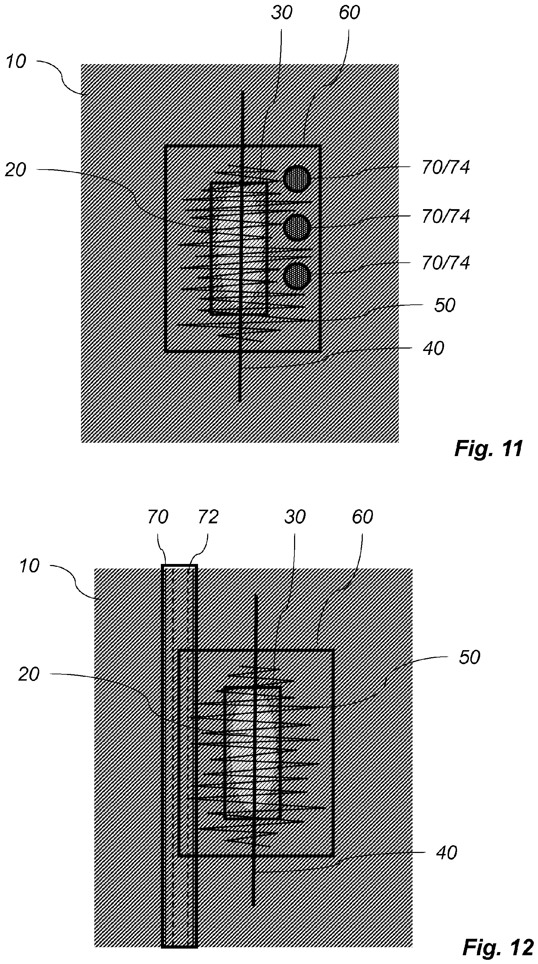

Fig. 11 illustrates an embodiment wherein the generation 108 of the joining pattern 50 is performed with regard to one or more exclusion areas 70. In this example the textile 10 is provided with three metal rivets 74. The joining pattern 50 cannot extend over the metal rivets 74 since it may damage the machine 3 intended to use the joining pattern 50. When such objects are present on the textile 10, which may also be e.g. zippers, buttons, pockets, they need to be identified. A step of identifying objects for forming an exclusion area 70 may be performed. Such identification may be performed by a machine learning model trained to identify objects on a textile that needs to be excluded from a joining pattern 50, such as zippers, buttons, rivets, other metal objects, pockets, seams. When the exclusion area 70 is formed based on the identified objects, the generation of the joining pattern 50 may be performed taking the exclusion area 70 into account.

In the embodiment of fig. 11, the exclusion areas 70 are formed in the buffer area 60. The distribution of end points 56 are thereby randomized within the available area in the buffer area 60 such that no end points 56 or pattern segments 54 are located in or extend across any exclusion area 70. When the direction of a pattern segment 54 extend towards an exclusion area 70 within the buffer area 60, the location of the end point 56 may be randomized within the area between the boundary of the required portion 30 and the exclusion area 70.

In situations where an exclusion area 70 is located at least partly within an intended required portion 30, the boundary of the required portion 30 may be adapted to the boundary of the exclusion area 70 within the required portion 30. The end points 56 may at the location of the exclusion area 70 then be located at the interface boundary between the required portion 30 and the exclusion area 70. This may be regardless of if a buffer area 60 is used or not.

Fig. 12 illustrates an embodiment wherein a seam 72 is located near the required portion 30, such that a portion of the seam 72 extends through the buffer area 60. The seam 72 may form part of an exclusion area 70 to be excluded from distribution of end points 56 for the pattern segments 54. However, in some embodiments, the pattern segments 54 may be allowed to extend a distance onto the seam 72. End points 56 may thereby be located within the distance into the seam 72. The distance may provide a maximum distance into the seam 72 at which end points 56 may be located. The distribution of end points 56 may then be randomized with said distance into the seam 72 as a limit. As seen in fig. 12, the buffer area 60 extends further over the seam 72, but the exclusion area 70 provides that end points 56 may be located at maximum within the distance into the seam 72. The distance may be 1-5 mm into the seam 72, measured from an edge of the seam 72.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A computer-implemented method (100) for generating a joining pattern (50) for a textile (10) based on an image of the textile (10), the method comprising the following steps:
acquiring (102) an image of a portion of the textile captured by a camera device (2);
identifying (104) a required portion (30) of the textile (10) being required to be covered by the joining pattern (50), wherein said identifying is performed using an image analysis technology, a machine learning model trained to recognize the required portion, or from manual input by a user in a man-machine interface;
identifying (106) a textile structure of the textile (10) from the acquired image by an image analysis technology, a machine learning model trained to recognize textile structures of textiles, or from manual input by a user in a man-machine interface; and
generating (108) the joining pattern (50) based on the required portion (30) of the textile (10), and the identified textile structure wherein the joining pattern (50) is adapted to cover at least the required portion (30) of the textile (10).

2. The method according to claim 1, wherein the step of generating (108) the joining pattern (50) comprises steps of
determining a plurality of pattern segments (54);
determining a direction for each pattern segment (54); and
determining end points (56) for each pattern segment (54).

3. The method according to claim 2, wherein the pattern segments (54) extend in straight lines between the end points (56), or extend in an arc shape between the end points (56).

4. The method according to any one of the preceding claims, wherein the step of identifying (106) the textile structure comprises a step of identifying a weave direction (40), a weave type, a thread direction and/or a thread size of the textile.

5. The method according to any one of the preceding claims, wherein the step of identifying (106) the textile structure further comprises detecting one or more colors of the textile in the required portion, and the step of generating (108) the joining pattern (50) further comprises a step of determining one or more colors for the joining pattern (50) based on the identified detected one or more colors.

6. The method according to claim 2 or any one of claims 3-5 when dependent on claim 2, wherein the end points (56) for the pattern segments (54) are determined on a bounding line of the required portion (30).

7. The method according to claim 2 or any one of claims 3-6 when dependent on claim 2, wherein the method further comprises a step of identifying a buffer area (60) extending outside the required portion (30) and surrounding the required portion, and randomly distributing the end points (56) for each pattern segment (54) in the buffer area (60) along the determined direction for each pattern segment (54).

8. The method according to claim 2 or any one of claims 3-7 when dependent on claim 2, wherein the step of generating (108) the joining pattern (50) further comprises the steps of:
determining a center line (42) of the required portion (30); and
determining the direction of each pattern segment (54) as within an angle interval from a direction of the center line (42).

9. The method according to claim 2 or any one of claims 3-8 when dependent on claim 2, wherein when the textile structure is identified as a weave direction (40) or thread direction, the direction of each pattern segment (54) is determined within an angle interval from the identified weave direction or thread direction.

10. The method according to claim 2 or any one of claims 3-9 when dependent on claim 2, further comprising a step of identifying a seam (72) of the textile (10), wherein end points (56) of the pattern segments (54) and/or a portion of the pattern segments (54) will be positioned on the seam (72).

11. The method according to any of the preceding claims, further comprising identifying an exclusion area (70) of the textile (10) defining one or more areas to be excluded from being covered by the joining pattern (50), and wherein the step of generating (108) the joining pattern is further based on the exclusion area (70).

12. The method according to claim 11, wherein the step of identifying the exclusion area (70) is performed by a machine learning model trained to identify exclusion areas of textiles.

13. The method according to claim 11 or 12 when dependent on claim 2, wherein the exclusion area (70) is one or more areas where the end points (56) of the pattern segments (54) will not be positioned to during the step of generating (108) the joining pattern (50), and through which areas the pattern segments (54) will not extend.

14. The method according to any one of claims 11-14, further comprising a step of identifying one or more objects (72, 74) that forms part of the one or more exclusion areas (70), such as one or more seams, zippers, buttons, rivets and/or other objects of a hard material.

15. A joining pattern generation device (1) for generating a joining pattern (50) for a textile (10), comprising a processing unit (6) configured to:
acquire an image of a portion of a textile (10) via a camera device (2),
identify a required portion (30) of the textile (10) being required to be covered by the joining pattern (50), wherein said identifying is performed using an image analysis technology, a machine learning model trained to recognize the required portion, or from manual input by a user in a man-machine interface;
identify a textile structure of the textile (10) from the acquired image by an image analysis technology, a machine learning model trained to recognize textile structures of textiles, or from manual input by a user in a man-machine interface; and
generating the joining pattern (50) based on the required portion (30) of the textile and the identified textile structure, wherein the joining pattern (50) is adapted to cover at least the required portion (30) of the textile (10).
